# EUROPEAN PATENT APPLICATION

(11) **EP 4 557 591 A1**
(43) Date of publication of application: **21.05.2025**
(21) Application number: 24212010.3
(22) Date of filing: 11.11.2024
(51) Int. Cl.: H02K 19/24, H02K 19/26, H02K 7/18, H02K 11/00

(54) **ELECTRICAL POWER GENERATOR WITH STATIONARY DIRECT CURRENT FIELD EXCITATION**

(30) Priority: 16.11.2023 US 202318511766
(71) Applicant: The Boeing Company, Arlington, VA 22202 (US)
(72) Inventor: OUYANG, Wen, Arlington, 22202 (US); RHATIGAN, Kevin Marshall, Arlington, 22202 (US); LIU, Shengyi, Arlington, 22202 (US)
(74) Representative: Sandri, Sandro

(57) **Abstract**

Examples are disclosed that relate to an electrical power generator (102) that has increased power density, efficiency, reliability, and reduced complexity relative to conventional approaches. In one disclosed example, an electrical power generator (102) includes a stator (200), a stationary armature winding (202), a stationary direct current (DC) field winding (204), a magnetic shaft (206), and a DC power source (112). The magnetic shaft (206) includes a rotor pole structure (212) including north pole(s) (214) and south pole(s) (216) that are axially offset relative to each other on the magnetic shaft (206) and are positioned on opposing sides of the stationary DC field winding (204). The DC power source (112) is electrically connected to the stationary DC field winding (204) and configured to induce a DC voltage in the stationary DC field winding (204) to generate a magnetic flux that is conducted through the magnetic shaft (206) and between the north pole(s) (214) and the south pole(s) (216) of the magnetic shaft (206).

## Description

### FIELD

The present disclosure relates generally to the field of electronics, and more specifically to electrical power generators.

### BACKGROUND

A conventional electrical power generator includes a shaft, an exciter, and a generator. The shaft is driven by a prime mover, such as an engine or turbine, that provides mechanical energy to turn the shaft. The exciter and the main generator include electronic components that are coupled to the shaft. In particular, the exciter includes a rotor winding and a rectifier that are coupled to the shaft and rotate based on rotation of the shaft. Further, the main generator includes a field winding that is coupled to the shaft and rotates based on rotation of the shaft. Within the exciter, the rotor winding induces an alternating current (AC) that is converted to a direct current (DC) current by the rectifier. The DC current output from the exciter is supplied to the field winding of the main generator to create a magnetic field around the shaft. Within the main generator, the magnetic field produced by the field winding interacts with a magnetic field produced by rotation of the shaft to induce an output voltage in a stator winding of the main generator. The output voltage can be controlled and adjusted as needed to maintain a stable electrical supply by regulating the DC current produced by the exciter.

Such a conventional electrical power generator has various issues. As one example, the rotating electronic components coupled to shaft make the conventional electrical power generator relatively complex to manufacture. This is because the rotating electronic components have to be designed to fit within the internal cavity of the stator, such that the shaft and the rotating electronic components can have clearance to rotate within the cavity. Moreover, the electrical connections for the rotating electronic components are complex. As another example, the rotating electronic components coupled to shaft are susceptible to degradation, because they are constantly moving during operation. This reduces reliability of the conventional electrical power generator since the conventional electrical power generator may not function properly when the rotating electronic components become degraded. Moreover, the operating costs of the conventional electrical power generator are relatively high because the rotating electronic components need to be replaced more frequently upon degradation. As yet another example, the rotating electronic components produce a significant amount of thermal stress on the conventional electrical power generator that needs to be accounted for via a cooling scheme, such as an air-cooling scheme or an oil-cooling scheme. Such a cooling scheme also increases the cost and complexity of the conventional electrical power generator.

### SUMMARY

Examples are disclosed that relate to an electrical power generator that has increased power density, efficiency, reliability, operational lifespan as well as reduced complexity and operating costs relative to the conventional electrical power generator discussed above. In one disclosed example, an electrical power generator includes a stator, a stationary armature winding, a stationary direct current (DC) field winding, a magnetic shaft, and a DC power source. The magnetic shaft includes a rotor pole structure including north pole(s) and south pole(s) that are axially offset relative to each other on the magnetic shaft and are positioned on opposing sides of the stationary DC field winding. The DC power source is electrically connected to the stationary DC field winding and configured to induce a DC voltage in the stationary DC field winding to generate a magnetic flux that is conducted through the magnetic shaft and between the north pole(s) and the south pole(s) of the magnetic shaft.

The features, functions, and advantages that have been discussed can be achieved independently in various embodiments or may be combined in yet other embodiments, further details of which can be seen with reference to the following description and drawings.

### BRIEF DESCRIPTION OF THE DRAWINGS

FIG. 1 schematically shows an example embodiment of an aircraft including an electrical power generator of the present disclosure.
FIG. 2 shows a top view of the electrical power generator of FIG. 1.
FIG. 3 shows a perspective view of the electrical power generator of FIG. 1.
FIG. 4 shows a cutout view of the electrical power generator of FIG. 1.
FIG. 5 shows a cross section view of an example embodiment of an electrical power generator including a flux path generated by the electrical power generator.

### DETAILED DESCRIPTION

A conventional electrical power generator has various issues related to rotating electronic components coupled to a shaft of the conventional electrical power generator. Accordingly, the present description is directed to an electrical power generator that has increased power density, efficiency, reliability, operational lifespan as well as reduced complexity and operating costs relative to the conventional electrical power generator. In one disclosed example, an electrical power generator includes a stator, a stationary armature winding, a stationary direct current (DC) field winding, a magnetic shaft, and a DC power source. The magnetic shaft includes a rotor pole structure including north pole(s) and south pole(s) that are axially offset relative to each other on the magnetic shaft and are positioned on opposing sides of the stationary DC field winding. The DC power source is electrically connected to the stationary DC field winding and configured to induce a DC voltage in the stationary DC field winding to generate a magnetic flux that is conducted through the magnetic shaft and between the north pole(s) and the south pole(s) of the magnetic shaft.

Because the armature winding and the DC field winding are stationary in the electrical power generator instead of being located on the shaft, the electrical power generator is less complex to design and manufacture. As one example, the stationary windings and the design of the rotor pole structure on the shaft alleviates the need for an exciter component that significantly reduces the complexity of the electrical power generator. As another example, the electrical connections for these stationary windings are less complex relative to electrical connections (e.g., brushes) of the conventional electrical power generator that includes rotating electronic components located on the shaft. As yet another example, the simplified shaft design allows for air flow to be introduced through an internal cavity of the electrical power generator when the magnetic shaft is spinning to reduce thermal stress on the magnetic shaft. This allows simplification or elimination of a cooling scheme for the electrical power generator.

Furthermore, because the armature winding and the DC field winding are stationary, the likelihood of these stationary windings becoming degraded during operation of the electrical power generator is reduced relative to the conventional electrical power generation where the electronic components located on the shaft are constantly rotating during operation. This increases the reliability and operational lifespan of the electrical power generator and reduces the operating costs relative to the conventional electrical power generator.

These benefits make the electrical power generator suitable for numerous applications. As one example, in aircraft applications, the electrical power generator may be used to generate power to meet the aircraft's electrical needs. More particularly, the electrical power generator may be employed to generate electrical power for various onboard systems and equipment, such as avionics equipment, lighting systems, environmental control systems (ECS), galley equipment, entertainment systems, and other electrical devices.

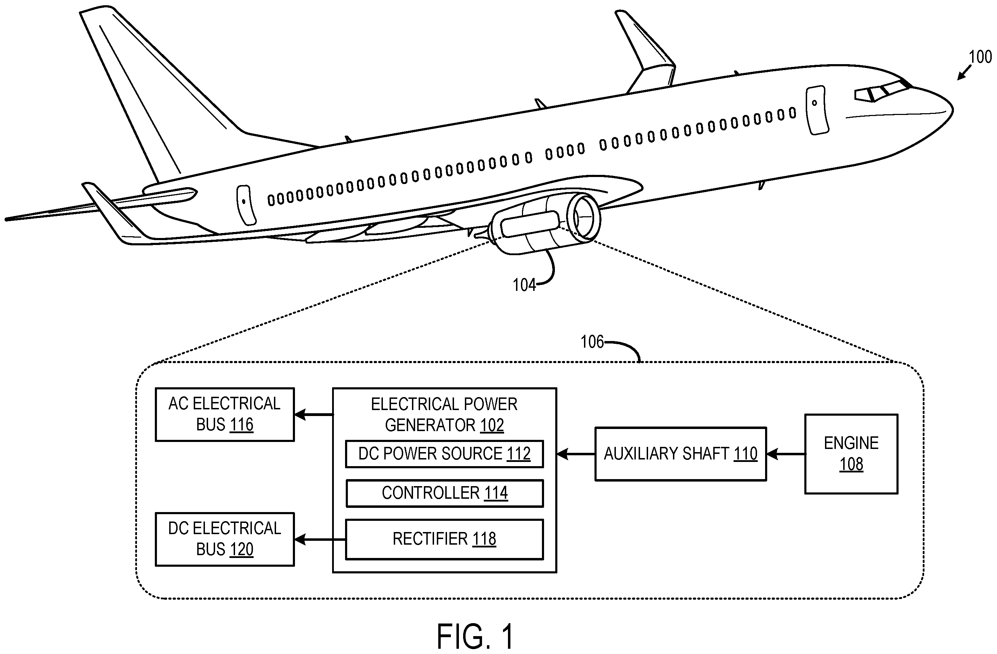

FIG. 1 schematically shows an example embodiment of an aircraft 100 including an electrical power generator 102 of the present disclosure. The aircraft 100 includes an engine compartment 104. Note that FIG. 1 depicts an imaginary cutout 106 that schematically shows relevant components within the engine compartment 104 for purposes of discussion. The cutout 106 does not exist in the actual engine compartment 104.

The aircraft 100 includes an engine 108 within the engine compartment 104. In one example, the engine 108 is a gas turbine / jet engine that is configured to provide power to propel the aircraft 100. More particularly, the jet engine operates on the principle of compressing incoming air, mixing it with fuel, combusting the mixture, and then expanding and accelerating the exhaust gases to create thrust to overcome drag and propel the aircraft 100 through the air during flight. In other embodiments, the engine 108 may take another form, such as a piston engine or a turboprop engine. The engine 108 may take any suitable form depending on the type of aircraft.

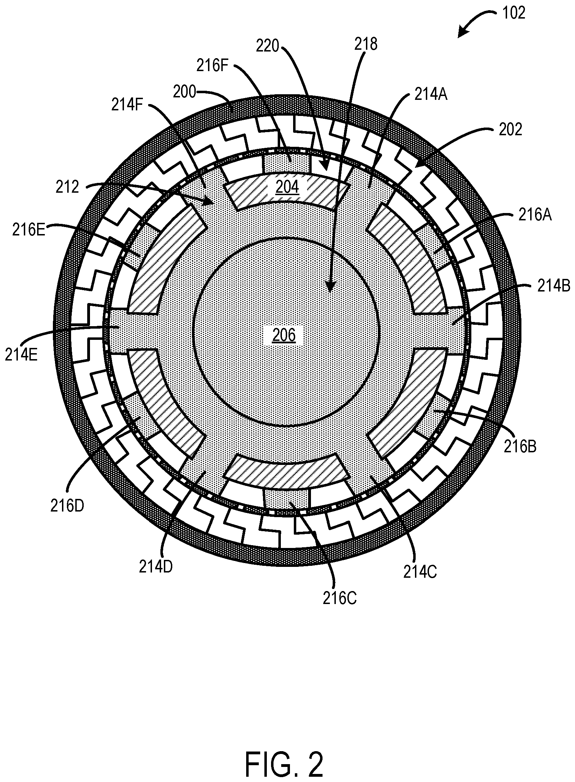

An auxiliary shaft 110 is driven by the engine 108 to provide mechanical power to drive various accessories and systems of the aircraft 100. The auxiliary shaft 110 is coupled to the electrical power generator 102. More particularly, the auxiliary shaft 110 is coupled to a magnetic shaft 206 (shown in FIGS. 2-4) of the electrical power generator 102, such that rotation of the auxiliary shaft 110 causes rotation of the magnetic shaft 206.

In some embodiments, the speed of the auxiliary shaft 110 varies with the speed of the engine 108. In other embodiments, the speed of the auxiliary shaft 110 may be controlled and/or fixed at a constant speed by a constant speed drive (not shown).

The electrical power generator 102 is configured to convert the mechanical power generated by rotation of the auxiliary shaft 110 into electrical power for various electrical loads of the aircraft 100. In particular, the electrical power generator 102 includes a DC power source 112 that is configured to induce a DC voltage in a stationary DC field winding 204 (shown in FIGS. 2-4) to generate a magnetic flux that is conducted through a rotor pole structure 212 of the magnetic shaft 206 (shown in FIGS. 2-4) to generate an output voltage to meet the electrical loads of the aircraft 100. The arrangement of the rotor pole structure 212 enables the magnetic flux to flow along a flux path that extends transversely across the rotor pole structure three-dimensionally in radial and axial directions relative to the magnetic shaft 206. More particularly, the flux path travels between north and south poles 214, 216 of the magnetic shaft 206 that are located on opposing sides of the stationary DC field winding 204.

The DC power source 112 may take various forms depending on the embodiment. In some embodiments, the DC power source 112 comprises a battery. In other embodiments, the DC power source 112 comprises a permanent magnet generator. The permanent magnet generator allows for the electrical power generator 102 to have "zero start" capability in which the electrical power generator 102 can self-start under conditions where the auxiliary shaft 110 is spinning slowly or not spinning. This feature improves the overall efficiency and reliability of the electrical power generator 102, because the electrical power generator 102 can generate electrical power as soon as conditions permit, helping to maximize energy production and reduce downtime. In still other embodiments, the DC power source 112 comprises a DC electrical bus. For example, the DC electrical bus may serve as the DC power source in fixed / stationary applications for the electrical power generator.

The electrical power generator 102 includes a controller 114 that is configured to monitor operation of the electrical power generator 102 and control the electrical power output by the electrical power generator 102. In particular, the controller 114 is configured to measure the output voltage of the electrical power generator 102. The controller 114 is configured to determine a feedback error based at least on a difference between the output voltage and a target voltage (e.g., corresponding to the electrical load of the aircraft 100 or an electrical subsystem). The controller 114 is configured to adjust a DC excitation current applied to the stationary DC field winding 204 based on the feedback error to adjust a strength of the magnetic flux that is conducted through the north and south poles 214, 216 of the magnetic shaft 206 and thereby adjust the output voltage to reconcile with the target voltage.

In some embodiments, the electrical power generator 102 is configured to output AC electrical power to an AC electrical bus 116. The AC electrical bus 116 is configured to supply the AC electrical power to a wide range of AC loads and systems on the aircraft 100. In such embodiments, a speed of the magnetic shaft 206 (shown in FIGS. 2-4) and a frequency of the AC electrical power output from the electrical power generator 102 are linearly coupled.

In other embodiments, the electrical power generator 102 is configured to output DC electrical power. More particularly, in such embodiments, the electrical power generator 102 optionally may include a stationary rectifier 118 that is configured to convert AC power generated in a stationary armature winding 202 (shown in FIG. 2) to DC electrical power. The electrical power generator 102 is configured to output the DC electrical power to a DC electrical bus 120. The DC electrical bus 120 is configured to supply the DC electrical power to a wide range of DC loads and systems on the aircraft 100.

Example electrical systems of the aircraft 100 that may receive AC electrical power or DC electrical power output from the electrical power generator 102 include avionics equipment, lighting systems, environmental control systems (ECS), galley equipment, entertainment systems, and other electrical devices.

In some embodiments, the controller 114 is configured to adjust a frequency of the electrical power output by the electrical power generator 102 to a desired output frequency. More particularly, the controller 114 can control the output frequency of the output electrical power by adjusting a frequency of the DC excitation current applied to the stationary DC field winding 204. In some embodiments, the controller 114 may be configured to adjust the frequency of the DC excitation current based on the speed of the auxiliary shaft 110 (and/or the magnetic shaft 206).

In some embodiments where the magnetic shaft 206 is rotated at a constant speed (e.g., as controlled by a constant speed drive), the electrical power generator 102 is configured to output constant frequency AC electrical power. In other embodiments where a speed of the magnetic shaft is variable (e.g., as a function of the speed of the auxiliary shaft 110), the electrical power generator 102 is configured to output variable frequency AC electrical power.

In the illustrated embodiment, the electrical power generator 102 is configured to output electrical power to various loads and systems in an aircraft. In other embodiments, the electrical power generator 102 may be configured to output electrical power in other types of vehicles (e.g., automobiles, spacecraft, watercraft, submersible vehicles, etc.). In still other embodiments, the electrical power generator 102 may be employed in stationary applications. In some embodiments, the electrical power generator 102 may be configured to provide AC electrical power to a propulsion engine of an aircraft or another type of vehicle. In such embodiments, the electrical power generator 102 may be alternatively or additionally configured to operate in an electric motor mode of operation.

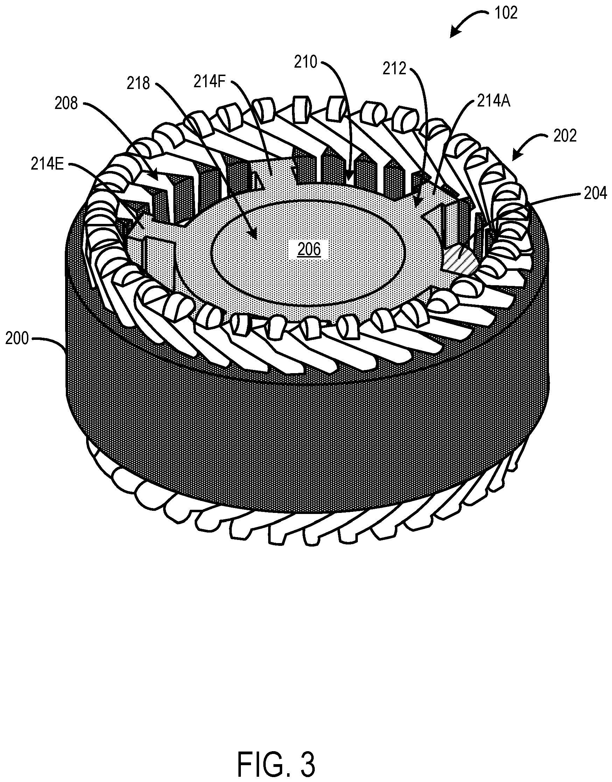

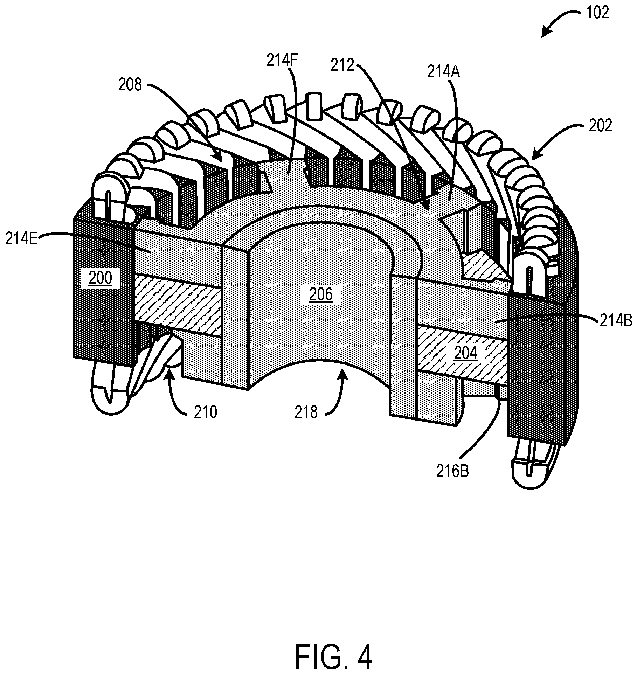

FIG. 2-4 show different views of the electrical power generator 102 of FIG. 1 schematically depicting relevant components. FIG. 2 shows a top view of the electrical power generator 102. FIG. 3 shows a perspective view of the electrical power generator 102. FIG. 4 show a partial cutout view of the electrical power generator 102. The electrical power generator 102 includes a stator 200, a stationary armature winding 202, a stationary DC field winding 204, and a magnetic shaft 206.

The stator 200 is configured to provide mechanical support and stability to the electrical power generator 102, and more particularly to maintain its position relative to the magnetic shaft 206. The stator 200 is configured to house the stationary armature winding 202. In one example, the stator 200 comprises a stack of laminated sheets having high magnetic conductivity. A plurality of slots 208 are formed in the stator 200 to accommodate the stationary armature winding 202.

The stationary armature winding 202 includes a plurality of conductive strands or large solid bars that are arranged in the stator 200 in a specific pattern to generate a magnetic field when energized with an alternating current. For example, the plurality of conductive strands of the stationary armature winding 202 can be arranged in the plurality of slots 208 formed in the stator 200 and wrapped around the stack of laminated sheets. The stationary armature winding 202 may comprise highly conductive materials, such as copper or aluminum.

The stator 200 forms a cylindrical cavity 210 and the stationary DC field winding 204 is coupled within the cylindrical cavity 210. In one example, the stationary DC field winding 204 is mounted along the inner diameter of the stator 200 along the cylindrical cavity 210. Note that the stationary DC field winding 204 is fixed within the cylindrical cavity 210 and does not move with the magnetic shaft 206.

The stationary DC field winding 204 is the source of magnetic flux that flows through a rotor pole structure 212 of the magnetic shaft 206. A number of turns of the stationary DC field winding 204 can be selected based at least on the DC current amplitude, terminal voltage regulation range, thermal/insulation requirements, and/or other parameters of the electrical power generator 102.

The magnetic shaft 206 extends axially through the cylindrical cavity 210 and the stationary DC field winding 204 within the stator 200. The magnetic shaft 206 functions as a flux conducting component as well as a mechanical structural component to support high-speed rotation during operation.

In some embodiments, the magnetic shaft 206 includes a hollow cavity 218 that extends axially within the magnetic shaft 206. The hollow cavity 218 reduces the weight of the magnetic shaft 206 and increases the heat dissipation characteristics of the magnetic shaft 206.

The magnetic shaft 206 includes the rotor pole structure 212 including one or more north poles 214 extending radially outward from the magnetic shaft 206 and one or more south poles 216 extending radially outward from the magnetic shaft 206. The one or more north poles 214 and the one or more south poles 216 are spaced apart axially along the magnetic shaft 206 and positioned on opposing sides of the stationary DC field winding 204. Further, the one or more north poles 214 are axially offset relative to the one or more south poles 216 on the magnetic shaft 206. The offsets / pole pitches of the north poles relative to each other, and the south poles relative to each other, as well as the offsets between pairs of north and south poles on opposing sides of the stationary DC field winding 204 form the rotor pole structure 212 on the magnetic shaft 206 that allows for the electrical power generator 102 to output three-phase electrical power via the stationary armature winding 202. In other embodiments, the arrangement of the poles 214, 216 of the rotor pole structure 212 on the magnetic shaft 206 may differ based on the phase of electrical power output by the electrical power generator 102. Further, in some embodiments, the offsets of the poles 214, 216 may be based at least on a desired output frequency of the electrical power output by the electrical power generator 102. In some embodiments, the offsets are measured by a number of degrees of electrical angle.

Additionally, the number of north poles and south poles included in the rotor pole structure 212 on opposing sides of the stationary DC field winding 204 may be based at least on a number of phases of electrical power output by the electrical power generator 102. In the illustrated embodiment, the rotor pole structure 212 includes six north poles 214A, 214B, 214C, 214D, 214E, 214F and six south poles 216A, 216B, 216C, 216D, 216E, 216F. The six pairs of north and south poles are a multiple of three and correspond to generating three-phase electrical power output by the electrical power generator 102.

The magnetic shaft 206 functions as a flux conducting component to allow magnetic flux to flow between the north and south poles of the rotor pole structure 212. The arrangement of the rotor pole structure 212 enables the magnetic flux to flow along a flux path that extends transversely across the rotor pole structure three-dimensionally in radial and axial directions relative to the magnetic shaft 206. More particularly, the flux path travels between north and south poles 214, 216 of the magnetic rotor 206 that are located on opposing sides of the stationary DC field winding 204. The stationary DC field winding 204 generates magnetic flux on the north and south poles 214, 216 and links the flux path of the magnetic flux to the stationary armature winding 202 to form a closed loop. The closed-loop flux path allows for the electrical power generator 102 to convert mechanical energy from the moving torque on the rotating magnetic shaft 206 into electrical power in the form of voltage and current in the stationary armature winding 202. Output terminals (not shown) may be electrically connected to the stationary armature winding 202 to distribute the electrical power generated by the electrical power generator 102 to various electrical loads and systems.

The rotor pole structure 212 of the magnetic shaft 206 is configured to introduce air flow through the stationary DC field winding 204 when the magnetic shaft 206 rotates during operation of the electrical power generator 102 in order to reduce thermal stress on the magnetic shaft 206. In particular, the shape / design of the cavity 210, the rotor pole structure 212, and the stationary DC field winding 204 collectively form air passages 220 that allow for air to flow through the cavity 210. This air flow provides cooling to the different components of the electrical power generator 102. In some embodiments, the electrical power generator 102 optionally may include a liquid cooling jacket formed within the stator to provide additional cooling capability.

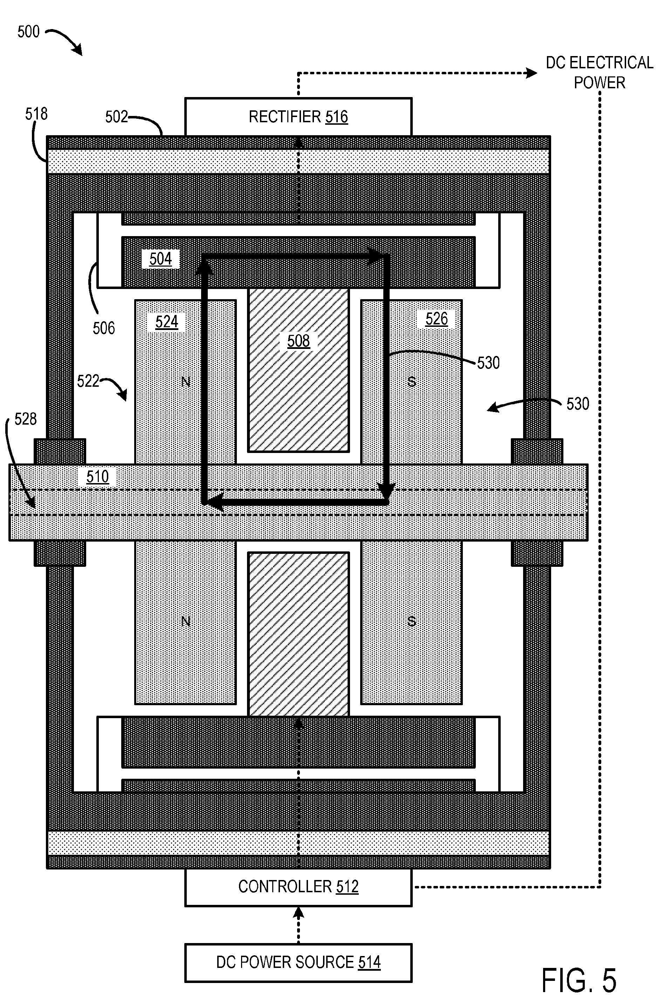

FIG. 5 shows a cross section view of an example embodiment of an electrical power generator 500. For example, the electrical power generator 500 may correspond to the electrical power generator 102 shown in FIG. 1. The electrical power generator 500 includes a single stage design of a rotor pole structure and is configured to output DC electrical power. The electrical power generator 500 includes a frame 502, a stator 504, a stationary armature winding 506, a stationary DC field winding 508, a magnetic shaft 510, a controller 512, a DC power source 514, and a stationary rectifier 516.

The frame 502 is configured to support and enclose the electronic components of the electrical power generator 500. The frame 502 includes a liquid cooling jacket 518 configured to circulate liquid coolant through the frame 502 to dissipate heat generated by the electrical power generator 500. In some embodiments, the liquid cooling jacket 518 may be incorporated into other components of the electrical power generator 500, such as the stator 504.

The stator 504 is configured to provide mechanical support and stability to the electrical power generator 500 and maintain its position relative to the magnetic shaft 510. The stator 504 is configured to house the stationary armature winding 506. The stator 504 forms an internal cavity 520 that extends axially within the stator 504.

The stationary armature winding 506 is coupled to and supported by the stator 504. The stationary armature winding 506 is electrically connected to the stationary rectifier 516.

The stationary DC field winding 508 is coupled to the stator 504 within the internal cavity 520. In one example, the stationary DC field winding 508 is mounted along the inner diameter of the stator 504. Note that the stationary DC field winding 508 is fixed within the internal cavity 520 and does not move with the magnetic shaft 510.

The magnetic shaft 510 extends through the internal cavity 520 formed by the stator 504 and the stationary DC field winding 508. The magnetic shaft 510 includes a rotor pole structure 522 including north poles 524 extending radially outward from the magnetic shaft 510 and south poles 526 extending radially outward from the magnetic shaft 510. More particularly, the north poles 524 and the south poles 526 are spaced apart axially along the magnetic shaft 510 and positioned on opposing sides of the stationary DC field winding 508. Note that although it is not discernable in this figure, the north poles 524 are axially offset relative to the south poles 526 on the magnetic shaft 510.

In some embodiments, the magnetic shaft 510 includes a hollow cavity 528 that extends axially within the magnetic shaft 510. The hollow cavity 528 reduces the weight of the magnetic shaft 510 and increases the heat dissipation characteristics of the magnetic shaft 510.

The DC power source 514 is electrically connected to the stationary DC field winding 508. The DC power source 514 is configured to induce a DC excitation voltage and current in the stationary DC field winding 508 to generate a magnetic flux based on interaction between the poles 524, 526 and the stationary DC field winding 508 as the magnetic shaft 510 rotates through the process of electromagnetic induction. The magnetic flux is conducted through the magnetic shaft 510 and the stator 504, and between the north poles 524 and the south poles 526. In particular, the magnetic flux follows a flux path 530 that extends transversely across the rotor pole structure 522 and three-dimensionally in radial and axial directions relative to the magnetic shaft 510.

In some embodiments, the DC power source comprises a battery. In some embodiments, the DC power source comprises a DC electrical bus. In some embodiments, the DC power source comprises a permanent magnet generator.

The magnetic flux generates AC electrical power in the stationary armature winding 506. The stationary armature winding 506 is electrically connected to the stationary rectifier 516. The stationary rectifier 516 is configured to convert the AC electrical power generated in the stationary armature winding to DC electrical power. The electrical power generator 500 is configured to output the DC electrical power from the stationary rectifier 516 to various electrical loads and systems.

The controller 512 is configured to measure an output voltage of DC electrical power output by the electrical power generator 500. Further, the controller 512 is configured to determine a feedback error based at least on a difference between the output voltage and a target voltage. For example, the target voltage may correspond to the voltage of an electrical load. The controller 512 is configured to adjust the DC excitation voltage and/or current applied to the stationary DC field winding 58 based on the feedback error to adjust a strength of the magnetic flux and thereby adjust the output voltage to reconcile with the target voltage. In some embodiments, the controller 512 is configured to adjust a frequency of the DC electrical power output by the electrical power generator 500 in a similar manner based on feedback.

The various embodiments of electrical power generators disclosed herein have a significant reduction in design complexity that results in the electrical power generators having a reduced number of parts and components, and more particularly a reduction in moving components, relative to a conventional electrical power generator. This allows for lower cost, faster and easier manufacture and maintenance of the electrical power generators. Moreover, such features of the electrical power generators produce a longer operational lifespan and have a reduced operating cost relative to a conventional electrical power generator.

In an example, an electrical power generator comprises a stator; a stationary armature winding coupled to the stator, a stationary direct current (DC) field winding coupled to the stator, a magnetic shaft extending through the stator and the stationary DC field winding and including a rotor pole structure including one or more north poles extending radially outward from the magnetic shaft and one or more south poles extending radially outward from the magnetic shaft, wherein the one or more north poles and the one or more south poles are spaced apart axially along the magnetic shaft and positioned on opposing sides of the stationary DC field winding, and wherein the one or more north poles are axially offset relative to the one or more south poles on the magnetic shaft, and a DC power source electrically connected to the stationary DC field winding and configured to induce a DC voltage in the stationary DC field winding to generate a magnetic flux that is conducted through the magnetic shaft and between the one or more north poles and the one or more south poles of the magnetic shaft. In this example and/or other examples, the electrical power generator may be configured to output alternating current (AC) electrical power, and a speed of the magnetic shaft and a frequency of the AC electrical power output from the electrical power generator may be linearly coupled. In this example and/or other examples, a speed of the magnetic shaft may be constant, and the electrical power generator may be configured to output constant frequency AC electrical power. In this example and/or other examples, a speed of the magnetic shaft may be variable, and the electrical power generator may be configured to output variable frequency AC electrical power. In this example and/or other examples, the magnetic shaft may be coupled to a variable speed shaft of an engine of an aircraft. In this example and/or other examples, the electrical power generator may further comprise a stationary rectifier electrically connected to the stationary armature winding and configured to convert AC electrical power generated in the stationary armature winding to DC electrical power, and the electrical power generator may be configured to output DC electrical power. In this example and/or other examples, the electrical power generator may further comprise a controller configured to 1) measure an output voltage of the electrical power generator, 2) determine a feedback error based at least on a difference between the output voltage and a target voltage, and 3) adjust a DC excitation current applied to the stationary DC field winding based on the feedback error to adjust a strength of the magnetic flux and thereby adjust the output voltage to reconcile with the target voltage. In this example and/or other examples, the rotor pole structure of the magnetic shaft may be configured to introduce air flow through the stationary DC field winding when the magnetic shaft rotates. In this example and/or other examples, the DC power source may comprise a battery. In this example and/or other examples, the DC power source may comprise a DC electrical bus. In this example and/or other examples, the DC power source may comprise a permanent magnet generator.

In another example, an electrical power generator comprises a stator, a stationary armature winding coupled to the stator, a stationary direct current (DC) field winding coupled to the stator, a magnetic shaft extending through the stator and the stationary DC field winding and including a rotor pole structure including one or more north poles extending radially outward from the magnetic shaft and one or more south poles extending radially outward from the magnetic shaft, wherein the one or more north poles and the one or more south poles are spaced apart axially along the magnetic shaft and positioned on opposing sides of the stationary DC field winding, and wherein the one or more north poles are axially offset relative to the one or more south poles on the magnetic shaft, a DC power source electrically connected to the stationary DC field winding and configured to induce a DC voltage in the stationary DC field winding to generate a magnetic flux that is conducted through the magnetic shaft and between the one or more north poles and the one or more south poles of the magnetic shaft, and a controller configured to 1) measure an output voltage of the electrical power generator, 2) determine a feedback error based at least on a difference between the output voltage and a target voltage, and 3) adjust a DC excitation current applied to the stationary DC field winding based on the feedback error to adjust a strength of the magnetic flux and thereby adjust the output voltage to reconcile with the target voltage. In this example and/or other examples, the electrical power generator may be configured to output alternating current (AC) electrical power, and a speed of the magnetic shaft and a frequency of the AC electrical power output from the electrical power generator may be linearly coupled. In this example and/or other examples, a speed of the magnetic shaft may be constant, and the electrical power generator may be configured to output constant frequency AC electrical power. In this example and/or other examples, a speed of the magnetic shaft may be variable, and the electrical power generator may be configured to output variable frequency AC electrical power. In this example and/or other examples, the magnetic shaft may be coupled to a variable speed shaft of an engine of an aircraft. In this example and/or other examples, the electrical power generator may further comprise a rectifier electrically connected to the stationary armature winding and configured to convert AC electrical power generated in the stationary armature winding to DC electrical power, and the electrical power generator may be configured to output DC electrical power. In this example and/or other examples, the DC power source may comprise a battery. In this example and/or other examples, the DC power source may comprise a permanent magnet generator (PMG).

In yet another example, an electrical power generator comprises a stator, a stationary armature winding coupled to the stator, a stationary direct current (DC) field winding coupled to the stator, a magnetic shaft extending through the stator and the stationary DC field winding and including a rotor pole structure including one or more north poles extending radially outward from the magnetic shaft and one or more south poles extending radially outward from the magnetic shaft, wherein the one or more north poles and the one or more south poles are spaced apart axially along the magnetic shaft and positioned on opposing sides of the stationary DC field winding, and wherein the one or more north poles are axially offset relative to the one or more south poles on the magnetic shaft, and a DC power source electrically connected to the stationary DC field winding and configured to induce a DC voltage in the stationary DC field winding to generate a magnetic flux that is conducted through the magnetic shaft and between the one or more north poles and the one or more south poles of the magnetic shaft, wherein the electrical power generator is configured to output alternating current (AC) electrical power, and wherein a speed of the magnetic shaft and a frequency of the AC electrical power output from the electrical power generator are linearly coupled.

Further, the present disclosure comprises examples according to the following clauses:
Clause 1. An electrical power generator comprising:
   a stator;
   a stationary armature winding coupled to the stator;
   a stationary direct current (DC) field winding coupled to the stator;
   a magnetic shaft extending through the stator and the stationary DC field winding and including a rotor pole structure including one or more north poles extending radially outward from the magnetic shaft and one or more south poles extending radially outward from the magnetic shaft, wherein the one or more north poles and the one or more south poles are spaced apart axially along the magnetic shaft and positioned on opposing sides of the stationary DC field winding, and wherein the one or more north poles are axially offset relative to the one or more south poles on the magnetic shaft; and
   a DC power source electrically connected to the stationary DC field winding and configured to induce a DC voltage in the stationary DC field winding to generate a magnetic flux that is conducted through the magnetic shaft and between the one or more north poles and the one or more south poles of the magnetic shaft.
Clause 2. The electrical power generator of clause 1, wherein the electrical power generator is configured to output alternating current (AC) electrical power, and wherein a speed of the magnetic shaft and a frequency of the AC electrical power output from the electrical power generator are linearly coupled.
Clause 3. The electrical power generator of clause 2, wherein a speed of the magnetic shaft is constant, and wherein the electrical power generator is configured to output constant frequency AC electrical power.
Clause 4. The electrical power generator of clause 2, wherein a speed of the magnetic shaft is variable, and wherein the electrical power generator is configured to output variable frequency AC electrical power.
Clause 5. The electrical power generator of clause 4, wherein the magnetic shaft is coupled to a variable speed shaft of an engine of an aircraft.
Clause 6. The electrical power generator of clause 1, further comprising:
   a stationary rectifier electrically connected to the stationary armature winding and configured to convert AC electrical power generated in the stationary armature winding to DC electrical power, and wherein the electrical power generator is configured to output DC electrical power.
Clause 7. The electrical power generator of clause 1, further comprising:
   a controller configured to
   1) measure an output voltage of the electrical power generator,
   2) determine a feedback error based at least on a difference between the output voltage and a target voltage, and
   3) adjust a DC excitation current applied to the stationary DC field winding based on the feedback error to adjust a strength of the magnetic flux and thereby adjust the output voltage to reconcile with the target voltage.
Clause 8. The electrical power generator of clause 1, wherein the rotor pole structure of the magnetic shaft is configured to introduce air flow through the stationary DC field winding when the magnetic shaft rotates.
Clause 9. The electrical power generator of clause 1, wherein the DC power source comprises a battery.
Clause 10. The electrical power generator of clause 1, wherein the DC power source comprises a DC electrical bus.
Clause 11. The electrical power generator of clause 1, wherein the DC power source comprises a permanent magnet generator.
Clause 12. An electrical power generator comprising:
   a stator;
   a stationary armature winding coupled to the stator;
   a stationary direct current (DC) field winding coupled to the stator;
   a magnetic shaft extending through the stator and the stationary DC field winding and including a rotor pole structure including one or more north poles extending radially outward from the magnetic shaft and one or more south poles extending radially outward from the magnetic shaft, wherein the one or more north poles and the one or more south poles are spaced apart axially along the magnetic shaft and positioned on opposing sides of the stationary DC field winding, and wherein the one or more north poles are axially offset relative to the one or more south poles on the magnetic shaft;
   a DC power source electrically connected to the stationary DC field winding and configured to induce a DC voltage in the stationary DC field winding to generate a magnetic flux that is conducted through the magnetic shaft and between the one or more north poles and the one or more south poles of the magnetic shaft; and
   a controller configured to
      1) measure an output voltage of the electrical power generator,
      2) determine a feedback error based at least on a difference between the output voltage and a target voltage, and
      3) adjust a DC excitation current applied to the stationary DC field winding based on the feedback error to adjust a strength of the magnetic flux and thereby adjust the output voltage to reconcile with the target voltage.
Clause 13. The electrical power generator of clause 12, wherein the electrical power generator is configured to output alternating current (AC) electrical power, and wherein a speed of the magnetic shaft and a frequency of the AC electrical power output from the electrical power generator are linearly coupled.
Clause 14. The electrical power generator of clause 13, wherein a speed of the magnetic shaft is constant, and wherein the electrical power generator is configured to output constant frequency AC electrical power.
Clause 15. The electrical power generator of clause 13, wherein a speed of the magnetic shaft is variable, and wherein the electrical power generator is configured to output variable frequency AC electrical power.
Clause 16. The electrical power generator of clause 15, wherein the magnetic shaft is coupled to a variable speed shaft of an engine of an aircraft.
Clause 17. The electrical power generator of clause 12, further comprising:
   a rectifier electrically connected to the stationary armature winding and configured to convert AC electrical power generated in the stationary armature winding to DC electrical power, and wherein the electrical power generator is configured to output DC electrical power.
Clause 18. The electrical power generator of clause 12, wherein the DC power source comprises a battery.
Clause 19. The electrical power generator of clause 12, wherein the DC power source comprises a permanent magnet generator (PMG).
Clause 20. An electrical power generator comprising:
   a stator;
   a stationary armature winding coupled to the stator;
   a stationary direct current (DC) field winding coupled to the stator;
   a magnetic shaft extending through the stator and the stationary DC field winding and including a rotor pole structure including one or more north poles extending radially outward from the magnetic shaft and one or more south poles extending radially outward from the magnetic shaft, wherein the one or more north poles and the one or more south poles are spaced apart axially along the magnetic shaft and positioned on opposing sides of the stationary DC field winding, and wherein the one or more north poles are axially offset relative to the one or more south poles on the magnetic shaft; and
   a DC power source electrically connected to the stationary DC field winding and configured to induce a DC voltage in the stationary DC field winding to generate a magnetic flux that is conducted through the magnetic shaft and between the one or more north poles and the one or more south poles of the magnetic shaft;
   wherein the electrical power generator is configured to output alternating current (AC) electrical power, and wherein a speed of the magnetic shaft and a frequency of the AC electrical power output from the electrical power generator are linearly coupled.

**Parts List:**

| | |
|---|---|
| aircraft | 100 |
| electrical power generator | 102 |
| engine compartment | 104 |
| imaginary cutout | 106 |
| engine | 108 |
| auxiliary shaft | 110 |
| DC power source | 112 |
| controller | 114 |
| AC electrical bus | 116 |
| stationary rectifier | 118 |
| DC electrical bus | 120 |
| stator | 200 |
| stationary armature winding | 202 |
| stationary DC field winding | 204 |
| magnetic shaft | 206 |
| slots | 208 |
| cylindrical cavity | 210 |
| rotor pole structure | 212 |
| north poles | 214 |
| six north poles | 214A, 214B, 214C, 214D, 214E, 214F |
| south poles | 216 |
| six south poles | 216A, 216B, 216C, 216D, 216E, 216F |
| hollow cavity | 218 |
| collectively form air passages | 220 |
| electrical power generator | 500 |
| frame | 502 |
| stator | 504 |
| stationary armature winding | 506 |
| stationary DC field winding | 508 |
| magnetic shaft | 510 |
| controller | 512 |
| DC power source | 514 |
| stationary rectifier | 516 |
| liquid cooling jacket | 518 |
| internal cavity | 520 |
| rotor pole structure | 522 |
| north poles | 524 |
| south poles | 526 |
| hollow cavity | 528 |
| flux path | 530 |

## Claims

1. An electrical power generator (102; 500) comprising:
a stator (200);
a stationary armature winding (202) coupled to the stator (200);
a stationary direct current (DC) field winding (204) coupled to the stator (200);
a magnetic shaft (206) extending through the stator (200) and the stationary DC field winding (204) and including a rotor pole structure (212) including one or more north poles (214) extending radially outward from the magnetic shaft (206) and one or more south poles extending (216) radially outward from the magnetic shaft (206), wherein the one or more north poles (214) and the one or more south poles (216) are spaced apart axially along the magnetic shaft (206) and positioned on opposing sides of the stationary DC field winding (204), and wherein the one or more north poles (214) are axially offset relative to the one or more south poles (216) on the magnetic shaft (206); and
a DC power source (112) electrically connected to the stationary DC field winding (204) and configured to induce a DC voltage in the stationary DC field winding (204) to generate a magnetic flux that is conducted through the magnetic shaft (206) and between the one or more north poles (214) and the one or more south poles (216) of the magnetic shaft (206).

2. The electrical power generator (102; 500) of claim 1, wherein the electrical power generator (102) is configured to output alternating current (AC) electrical power, and wherein a speed of the magnetic shaft (206) and a frequency of the AC electrical power output from the electrical power generator (102) are linearly coupled.

3. The electrical power generator (102; 500) of claim 2, wherein a speed of the magnetic shaft (206) is constant, and wherein the electrical power generator (102) is configured to output constant frequency AC electrical power.

4. The electrical power generator (102; 500) of claim 2, wherein a speed of the magnetic shaft (206) is variable, and wherein the electrical power generator (102) is configured to output variable frequency AC electrical power.

5. The electrical power generator (102; 500) of claim 4, wherein the magnetic shaft (206) is coupled to a variable speed shaft (110) of an engine (108) of an aircraft (100).

6. The electrical power generator (102; 500) of any one of the preceding claims, further comprising:
a stationary rectifier (516) electrically connected to the stationary armature winding (506) and configured to convert AC electrical power generated in the stationary armature winding (506) to DC electrical power, and wherein the electrical power generator (102) is configured to output DC electrical power.

7. The electrical power generator (102; 500) of any one of the preceding claims, further comprising:
a controller (512) configured to 1) measure an output voltage of the electrical power generator, 2) determine a feedback error based at least on a difference between the output voltage and a target voltage, and 3) adjust a DC excitation current applied to the stationary DC field winding (508) based on the feedback error to adjust a strength of the magnetic flux and thereby adjust the output voltage to reconcile with the target voltage.

8. The electrical power generator (102; 500) of any one of the preceding claims, wherein the rotor pole structure (212) of the magnetic shaft (206) is configured to introduce air flow through the stationary DC field winding (204) when the magnetic shaft (206) rotates.

9. The electrical power generator (102; 500) of any one of the preceding claims, wherein the DC power source (112) comprises a battery.

10. The electrical power generator (102; 500) of any one of claims 1-8, wherein the DC power source (112) comprises a DC electrical bus (120).

11. The electrical power generator (102; 500) of any one of claims 1-8, wherein the DC power source (112) comprises a permanent magnet generator .

12. The electrical power generator (102; 500) of any one of the preceding claims, wherein the magnetic shaft (206) includes a hollow cavity (218) that extends axially within the magnetic shaft (206).

13. The electrical power generator (102; 500) of any one of the preceding claims, wherein a plurality of slots (208) are formed in the stator (200) to accommodate the stationary armature winding (202).

14. The electrical power generator (102; 500) of any one of the preceding claims, wherein the stationary armature winding (202) includes a plurality of conductive strands or large solid bars that are arranged in the stator (200) in a specific pattern to generate a magnetic field when energized with an alternating current.

15. The electrical power generator (102; 500) of any one of the preceding claims, wherein a liquid cooling jacket (518) is formed within the stator (200) to dissipate heat generated by the electrical power generator (102; 500).
